# FASCICULE DE BREVET EUROPEEN

(11) **EP 1 453 644 B1**
(45) Date de publication et mention de la délivrance du brevet: **06.02.2008**
(21) Numéro de dépôt: 02798370.9
(22) Date de dépôt: 09.12.2002
(51) Int. Cl.: B27K 3/34, B27K 3/15

(54) **PROCEDE DE PRESERVATION ET D'AMELIORATION DES PROPRIETES MECANIQUES D'UN MATERIAU LIGNO-CELLULOSIQUE EN PARTICULIER DE BOIS**
VERFAHREN ZUR KONSERVIERUNG UND VERBESSERUNG DER MECHANISCHEN EIGENSCHAFTEN EINES LIGNOZELLULOSISCHEN MATERIALS INSBESONDERE VON HOLZ
METHOD FOR PRESERVING AND ENHANCING PROPERTIES OF A LIGNOCELLULOSIC MATERIAL IN PARTICULAR WOODEN

(30) Priorité: 11.12.2001 FR 0115993
(43) Date de publication de la demande: 08.09.2004
(73) Titulaire: ORGANISATION NATIONALE INTERPROFESSIONNELLE DES OLEAGINEUX- ONIDOL, 75008 Paris (FR); Bois Du Rouergue, 12290 Pont De Salars (FR); Novance, 60200 Venette (FR)
(72) Inventeur: MORARD, Marie, 31100 Toulouse (FR); VACA-GARCIA, Carlos, 31500 Touleuse (FR); BORREDON, Elisabeth, 31170 Tournefeuille (FR); GASET, Antoine, 31000 Toulouse (FR); LEMOR, Alain, 60200 Compiegne (FR); MAISONABE, Pierre, 12000 Rodez (FR)
(74) Mandataire: Cabinet BARRE LAFORGUE & associés
(86) Numéro de dépôt international: PCT/FR2002/004235
(87) Numéro de publication internationale: WO 2003/049913

(56) Documents cités:
- EP-A- 0 254 130
- WO-A-96/38275
- GB-A- 715 743
- US-A- 4 404 239
- US-A- 5 045 366
- E. D. SUTTIE ET AL.: "Chemically modified wood" MATERIAL UND ORGANISMEN, vol. 32, no. 3, 1999, page 159-182 XP008008280 cité dans la demande

## Description

L'invention concerne un procédé de traitement de matériaux ligno-cellulosiques en vue d'améliorer la préservation de ces matériaux, en particulier contre les attaques des champignons et des insectes, et d'en accroître les propriétés mécaniques, et ce, sans modifier sensiblement l'aspect et la nature desdits matériaux ligno-cellulosiques. Elle s'applique notamment à un procédé de protection de bois appelé à séjourner occasionnellement ou en permanence en milieu humide. Elle s'étend au matériau ligno-cellulosique protégé obtenu par mise en oeuvre du procédé.

On connaît des procédés de protection du bois consistant à réaliser en surface un revêtement polymère. Par exemple US-4 404 239 décrit l'utilisation d'une résine alkyle, formée à partir d'acides polycarboxyliques, de polyols et d'huile végétale. L'application de cette résine et sa polymérisation en surface du matériau assurent une protection de celui-ci vis-à-vis de l'humidité extérieure mais ne donne aucune protection interne en cas de présence de champignons, insectes ou larves xylophages. De plus, le bois naturel masqué par le revêtement n'est plus apparent de sorte que l'aspect et les propriétés de surface du matériau sont totalement modifiés par la présence du revêtement.

On connaît également des procédés de stratification du bois qui consistent à assurer une polymérisation d'un produit plastifiant au coeur même du matériau. Ainsi, GB-715 743 utilise pour assurer cette polymérisation in situ un produit plastifiant préparé en ajoutant à un diester des réactifs de polymérisation du type aminé, dérivé de cellulose et/ou polymère vinylique. Un tel traitement modifie totalement la nature des fibres cellulosiques et conduit à un bois stratifié qui présente un aspect et possède des propriétés très différentes d'un bois naturel comme cela est bien connu.

La présente invention vise un procédé de nature différente qui préserve les fibres cellulosiques, mais évite toute altération ou modification substantielle de celles-ci de façon que le bois naturel garde ses propriétés essentielles.

Les procédés traditionnels de ce type pour protéger un bois appelé à séjourner en milieu humide consistent à imprégner les fibre cellulosiques au moyen de créosotes ou de sels ou oxydes minéraux en solution aqueuse. Ces procédés assurent une bonne préservation du bois et lui confèrent une protection fongicide satisfaisante sans en modifier la nature. Toutefois, ils présentent un très grave défaut qui réside dans leur caractère extrêmement polluant (pour l'environnement et pour l'homme) en raison de la nature des composés utilisés.

La volonté de préserver l'environnement a conduit, depuis une dizaine d'années, à des recherches et essais pour éviter l'utilisation de ces composés. En particulier WO 96/38275 décrit un procédé de traitement du bois qui consiste à imprégner celui-ci aux moyens d'huile végétale, d'anhydride maléique et d'alcool, à sécher le bois pour en éliminer l'alcool et à le soumettre ensuite à un traitement thermique en vue de "lier" l'huile au bois. Toutefois, un tel procédé de traitement présente deux défauts majeurs qui ont entraîné son absence d'exploitation; en premier lieu, il confère au bois traité une coloration brun foncé qui est inacceptable dans la plupart des applications ; en outre, il conditionne une fragilisation du bois qui devient cassant, friable et perd une partie de ses propriétés de résistance mécanique. De plus, il faut souligner que ce traitement ne fournit aucune protection contre les insectes xylophages.

Un autre procédé, décrit dans EP-0 254 130, consiste à réaliser le traitement à l'aide d'une formulation en solution aqueuse contenant un sel, des principes actifs et des additifs. Ce sel (sel d'ammonium notamment) est obtenu en faisant réagir de l'anhydride maléique avec soit une huile, soit un acide gras insaturé, soit un ester d'acide gras, avec une neutralisation systématique des fonctions acides par une base pour conduire au sel aqueux, notamment sel d'ammonium. Ce sel en solution aqueuse a pour unique fonction de faciliter la pénétration du principe actif et des additifs dans le bois et leur répartition homogène au sein de celui-ci. Il ne permet en aucun cas d'assurer à lui seul une protection contre l'attaque des champignons, insectes, bactéries... ou une protection contre la pénétration d'eau.

Par ailleurs, la publication : "Chemically modified solid wood, Edward D. Suttie et al., Mater. Org. 1999, vol. 32 (3) 159-182" propose un traitement de préservation du bois qui consiste à modifier chimiquement le bois en le faisant réagir avec un composé réactif ; l'anhydride alkényle succinique (ASA) et l'anhydride succinique sont, entre autres, cités dans cette publication. Il est indiqué dans cette publication que l'ASA ne modifie pas l'absorption d'humidité par le bois car la réaction ne se produit qu'en surface (p. 166, 2^{e} §) ; il est également indiqué que l'ASA confère peu ou pas de résistance aux attaques fongicides (p. 166, 2^{e} §). En ce qui concerne l'anhydride succinique, un de ses défauts réside dans son état naturel solide qui contraint à le mettre en solution dans un solvant pour imprégner le bois (la pyridine étant le solvant préconisé dans cette publication : p. 160, 3^{e} et 4^{e} §) ce qui augmente le coût du traitement et entraîne une pollution très difficile à éliminer (pour la plupart des solvants habituels). De plus, l'anhydride succinique présente une efficacité fongicide médiocre comme le montre les figure 5 p. 171 et figure 7 p. 175 de cette publication.

Actuellement aucun procédé de traitement du bois ne donne satisfaction, à la fois, sur le plan de la préservation de l'environnement et de l'homme, sur celui des performances atteintes et sur celui de la préservation de la nature et de l'aspect des fibres ligno-cellulosiques.

La présente invention se propose de remédier à cette absence et de fournir un procédé de traitement du bois, ou plus généralement d'un matériau ligno-cellulosique pourvu de fonctions hydroxyles, qui n'entraîne pas de pollution gênante pour l'homme et pour l'environnement et assure une bonne protection à la fois fongicide et insecticide du matériau, sans entraîner de modification de nature, d'aspect ou de coloration de celui-ci.

Un autre objectif de l'invention est de fournir un traitement qui améliore les propriétés mécaniques du matériau ligno-cellulosique.

A cet effet, le procédé conforme à l'invention pour traiter un matériau ligno-cellulosique en vue d'améliorer sa préservation et d'accroître ses propriétés mécaniques se caractérise en ce que :
- on imprègne le matériau ligno-cellulosique au moyen d'un ester d'anhydride alkényle succinique (dit ester d'ASA) ou d'un ester d'acide alkényle succinique (dit ester d'ASAcide), possédant au moins une chaîne aliphatique estérifiée pourvue en bout de chaîne d'une fonction ester,
- on opère un greffage de l'ester d'ASA ou de l'ester d'ASAcide sur le matériau ligno-cellulosique en engendrant la fixation d'au moins une partie des radicaux anhydride ou acide de l'ester d'ASA ou de l'ester d'ASAcide sur les fonctions hydroxyles du matériau ligno-cellulosique.

L'invention conduit donc à utiliser soit l'ester d'ASA, soit l'ester d'ASAcide. L'ester d'ASA a pour formule générale : 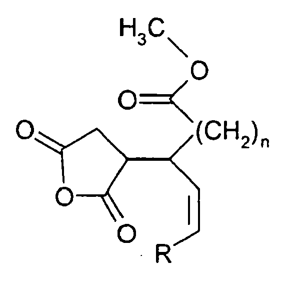 où R est un atome d'hydrogène, un radical alkyle, ou bien un radical alkényle.

Le greffage de ce composé s'effectue par ouverture d'au moins une partie des radicaux anhydride et leur fixation sur les fonctions hydroxyles du matériau ligno-cellulosique. Préalablement à cette fixation, une certaine proportion des radicaux anhydride peut être hydrolysée en cas de présence d'eau et conduire à la formation d'ester d'ASAcide. Ce dernier composé, qui peut donc être utilisé directement ou provenir de l'hydrolyse de l'ester d'ASA comme ci-dessus évoqué, a pour formule générale :

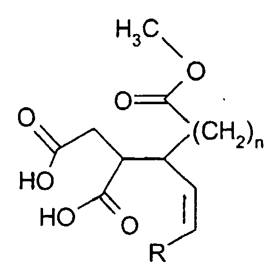

Le greffage de ce composé s'effectue par fixation directe des radicaux acide carboxylique sur les fonctions hydroxyle du matériau ligno-cellulosique. Après fixation, on peut symboliser le matériau ligno-cellulosique - par la formule suivante :

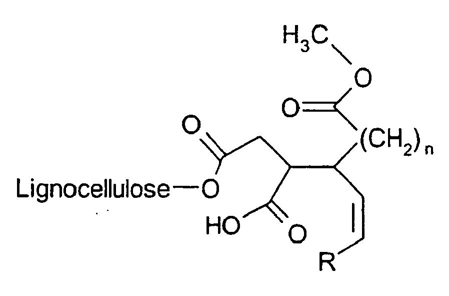

L'ester d'ASA ou ester d'ASAcide est liquide à température ambiante et les essais ont montré qu'il pénétrait en profondeur dans le matériau ligno-cellulosique lors de l'imprégnation. Cette différence de comportement par rapport à l'ASA peut être attribuée à la présence des fonctions ester en bout de chaîne et probablement à la position non terminale des radicaux anhydride ou acide carboxylique. Le greffage peut s'opérer à température ambiante (c'est-à-dire à une température comprise entre 15°C et 30°C) : les expérimentations ont en effet démontré que le pourcentage de liaisons covalentes, obtenues par fixation de l'ester d'ASA ou ester d'ASAacide sur les fonctions hydroxyles du matériau, est suffisant pour conduire à une bonne protection fongicide et xylophage du matériau ; ce mode de mise en oeuvre est intéressant en pratique en raison de sa facilité d'exécution, même s'il peut demander des temps de traitement relativement longs si l'on souhaite une protection poussée de longue durée. Pour écourter les temps de traitement, on peut aussi opérer le greffage à chaud, en particulier à une température comprise entre 60°C et 160°C, préférentiellement entre 100°C et 140°C. A cette température, les fonctions hydroxyles du matériau ligno-cellulosique engendrent une fixation très rapide de la totalité (ou quasi-totalité) des fonctions réactives de l'ester d'ASA ou de l'ester d'ASAcide, formant avec chaque molécule de ce dernier une liaison covalente. Le procédé conduit à un matériau ligno-cellulosique bénéficiant d'une protection extrêmement efficace contre l'ensemble des agents d'altération biologique du bois : champignons inférieurs et supérieurs et insectes. (Il faut noter que l'on ne connaît pas, à l'heure actuelle, de composés qui soient capables de détruire efficacement à la fois les champignons lignivores inférieurs et supérieurs). Aucun changement d'aspect ni coloration significative ne sont observés à l'issue du procédé, que la mise en oeuvre soit effectuée à chaud ou à froid. De plus, l'on n'observe aucune variation dimensionnelle du matériau (gonflement ou autre), le procédé entraînant uniquement une augmentation de densité. En outre, on a pu mettre en évidence que le module de Young et la résistance à la flexion du matériau traité subissent une augmentation notable (plus de 100 % dans certains essais). A la connaissance des inventeurs, aucun traitement existant ne conduit à un tel résultat surprenant et spectaculaire ; ce résultat est difficilement explicable à l'heure actuelle. Il est possible que ce soit la pénétration massive de l'ester d'ASA ou ester d'ASAcide (due aux fonctions ester en bout de chaîne et à la position intermédiaire des fonctions réactives) et le pourcentage significatif des liaisons créées qui entraînent cette augmentation (grâce à une augmentation importante et permanente de la densité). La phase d'imprégnation qui permet à l'ester d'ASA ou ester d'ASAcide de pénétrer dans le matériau ligno-cellulosique peut être mise en oeuvre conformément à l'une quelconque des méthodes classiquement utilisées pour imprégner un bois : trempage, badigeonnage, imprégnation sous vide ou sous pression....

Il convient de souligner que, selon l'essence même du procédé de l'invention, le composé spécifique sus-évoqué ne comporte aucun produit polymérisant et ne donne lieu à aucune réticulation entre molécules de ce composé : après pénétration, ce composé se fixe sur les fonctions hydroxyles du matériau ligno-cellulosique sans en modifier substantiellement la nature ou l'aspect.

On utilise de préférence un ester d'ASA ou un mélange d'esters d'ASA du groupe suivant : ester d'ASA oléique, ester d'ASA linoléique, ester d'ASA linolénique, ester d'ASA érucique. Ces composés donnent de bons résultats et présentent l'avantage d'être disponibles sur le marché et peu onéreux ; ils peuvent être obtenus par des procédés classiques à partir de végétaux oléagineux (colza, tournesol, lin, soja...).

Selon un mode de mise en oeuvre préférentiel du procédé de traitement, on utilise l'ester d'ASA ou ester d'ASAcide en solution dans un composé vecteur constitué par un ester d'acide gras, ledit ester d'ASA ou ester d'ASAcide étant solubilisé dans l'ester d'acide gras en proportion pondérale au moins égale à 5% par rapport au poids de la solution. Cette mise en oeuvre améliore significativement la pénétration de l'ester d'ASA ou ester d'ASAcide dans le matériau ligno-cellulosique (pénétration plus rapide en quantités plus élevées). Le composé vecteur utilisé peut en particulier être un ester méthylique qui peut être extrait à un faible coût d'huiles végétales (colza, tournesol, ...). Un bon compromis pénétration/efficacité de la protection est obtenu en utilisant un ester d'ASA en solution dans un ester méthylique dans une proportion pondérale comprise entre 25 % et 60 % d'ester d'ASA par rapport au poids de la solution.

Le produit utilisé dans le procédé de traitement conforme à l'invention peut être préalablement préparé en faisant agir à chaud à une température comprise entre 170°C et 230°C un ester d'acide gras végétal et de l'anhydride maléique MAH, de façon à produire une ène-réaction (bien connue en soi) qui conduit à la formation d'ester d'ASA. L'anhydride maléique est de préférence prévu en proportion inférieure à la proportion stoechiométrique de la ène-réaction, de façon que la quantité résiduelle de ce composé en fin de réaction soit faible (inférieure à une valeur de l'ordre de 5 à 8 %). L'ester d'acide gras végétal est ainsi en excès et la quantité de ce composé n'ayant pas réagi sert de composé vecteur lors du traitement du matériau ligno-cellulosique.

L'invention s'étend à l'application du procédé au traitement du bois. De préférence, l'imprégnation est alors réalisée de façon que la quantité d'ester d'ASA soit comprise entre 20 kg et 300 kg par m³ de bois à traiter. Les essais ont montré que le bois obtenu bénéficiait d'une bonne protection fongicide et insecticide et présentait un module de Young et une résistance à la flexion significativement accrus.

L'invention s'étend également au matériau ligno-cellulosique, en particulier bois, traité par mise en oeuvre du procédé précédemment défini. Ce matériau se caractérise en ce qu'il porte des molécules d'ester d'ASA ou d'ester d'ASAcide greffées sur des fonctions hydroxyles du matériau. Le pourcentage de fonctions hydroxyles ainsi occupées peut varier selon les conditions de traitement et est en pratique ajusté aux contraintes de l'application envisagée. La fraction d'ester d'ASA ou ester d'ASAcide ayant pénétré dans le matériau et n'ayant pas engendré une liaison covalente est absorbée par le matériau et les expérimentations ont permis de constater que cette fixation par absorption était stable (vraisemblablement grâce à une rétention accrue due à la fraction greffée).

Les exemples qui suivent illustrent le procédé de l'invention et les performances des bois traités obtenus.

### EXEMPLE 1 :

La formulation de l'ester végétal d'ASA est obtenue par la synthèse dans un réacteur batch de 200 litres selon les paramètres suivants :
- température de réaction : 200°C,
- rapport molaire nMAH / nEsters insaturés : 0,9,
- durée totale de la réaction : 15 heures dont 9 heures à 200°C,
- composition de l'ester méthylique de colza utilisé :
   ● oléate de méthyle : 63,5%
   ● linoléate de méthyle : 22%
   ● palmitate de méthyle : 6%
   ● stéarate de méthyle : 2%
   ● linolénate de méthyle : non dosé
   ● acides gras libres : 3,5%

Cette synthèse a abouti à un produit d'ester d'ASA de composition suivante :
- ester d'ASA oléique : 30%
- ester d'ASA linoléique : 24%
- ester méthylique de colza : 40%
- MAH résiduel: 6%

Ce produit a une densité de 0,97 et une viscosité de 188 cPoise. Les esters d'ASA sont en solution dans l'ester méthylique de colza.

Ce produit a permis de traiter des éprouvettes d'aubier de pin sylvestre de tailles différentes selon la méthode suivante. Les pièces de bois sont plongées dans la solution précédemment décrite à 30°C, sous vide partiel (14 mm Hg) pendant 30 minutes. Puis la pression a été ramenée à la pression atmosphérique et la température a été ensuite augmentée et maintenue à 140°C pendant 2 heures. Après refroidissement, les pièces de bois ont été essuyées à l'aide d'un papier absorbant afin d'éliminer l'excédent de produit présent à la surface des éprouvettes. Aucune variation dimensionnelle des éprouvettes traitées n'a été constatée.

Les différentes éprouvettes de pin sylvestre sont soumises à des tests normés européens pour évaluer la capacité de protection du produit vis-à-vis de certains ennemis naturels du bois.

### 1) Résistance aux agents du bleuissement : norme européenne EN 152 :

### Eprouvettes :

Les éprouvettes traitées (24) ont les dimensions suivantes : 110 x 50 x 10 (mm) et le taux d'imprégnation moyen est de 446±55 Kg/m³, aucune variation dimensionnelle n'a été constatée.

### Description :

Les éprouvettes traitées ont été soumises au test de résistance aux agents de bleuissement selon la norme européenne EN 152. Comme le stipule la norme, certaines éprouvettes ont subi des épreuves de vieillissement accéléré dans un weatheromètre comprenant une lampe à Xénon. Puis, les éprouvettes traitées ont été inoculées avec une solution composée d'un mélange de spores de deux types de champignons (Ascomycètes): *Aureobasidium* et *Sclerophoma.* L'incubation dure 6 semaines (en sus il y a les épreuves de vieillissement dont la durée maximale est de 6 semaines), à 20°C et dans une atmosphère relative de 60% d'humidité.

### Résultats :

Selon la norme européenne EN 152, le traitement décrit ci-dessus est un moyen de protection du bois à l'encontre des agents de bleuissement car le taux de bleuissement a une valeur de 0 sur une échelle de 5.

### 2) Résistance aux moisissures ou Ascomycètes :

### Eprouvettes :

Les éprouvettes traitées (20) ont les dimensions suivantes : 40 x 30 x 5 (mm) et le taux d'imprégnation moyen est de 539±37 Kg/m3, aucune variation dimensionnelle n'a été constatée.

### Description :

Les éprouvettes traitées ont été soumises au test de résistance aux moisissures, non normé, mais selon le protocole de la norme européenne EN 152. Ainsi, les éprouvettes traitées ont été inoculées par 5 types de champignons inférieurs :
- *Cladosporium cladosporoides,*
- *Pénicillium purpurogenium,*
- *Alternaria alternata,*
- *Aspergillus versicolor,*
- *Trichoderma chiarcianu.*
L'incubation dure 4 semaines à 20°C et dans une atmosphère relative de 60% d'humidité.

### Résultats :

Après 4 semaines d'incubation entre le bois traité et la solution de spores, les tests montrent que les éprouvettes traitées par le procédé décrit ci-dessus présente un taux de recouvrement des éprouvettes de 0 sur une échelle de 5, le traitement permet, donc, de protéger le bois contre le recouvrement par les moisissures.

### 3) Résistance à la pourriture : norme européenne EN 113

### Eprouvettes :

Les éprouvettes traitées (25) ont les dimensions suivantes : 30 x 10 x 5 (mm) et le taux d'imprégnation moyen est de 423±18 Kg/m3, aucune variation dimensionnelle n'a été constatée.

### Description :

Les éprouvettes traitées ont été soumises au test de résistance à la pourriture selon la norme européenne EN 113 accélérée. Certaines éprouvettes ont subi des épreuves de vieillissement accéléré selon la norme - européenne EN 84 (délavage) accéléré. Ainsi les éprouvettes ont été inoculées avec le champignon responsable de la pourriture brune : *Coniophora puteana.* L'incubation dure 6 semaines à 20°C et dans une atmosphère dont l'humidité relative est de 60%.

### Résultats :

A l'issue du test, les éprouvettes traitées ne présentent aucun signe de dégradation dûe au champignon contrairement aux blocs de contrôle (éprouvettes molles et noires). De plus, la perte de masse corrigée est inférieure à 3%, donc selon la norme EN 599, qui définit la performance d'un produit de préservation, notre traitement permet de protéger le bois à l'encontre de la pourriture.

### 4) Résistance à l'attaque d'Hylotropus bajulus ou Capricorne des maisons : norme européenne EN 46 et EN 47

### Eprouvettes :

Les éprouvettes traitées (24) ont les dimensions suivantes : 50 x 25 x 15 (mm) et le taux d'imprégnation moyen est de 476±64 Kg/m3, aucune variation dimensionnelle n'a été constatée.

### Description :

Les éprouvettes traitées ont été soumises à deux tests de résistance aux insectes à larves xylophages (*Hylotropus bajulus*): normes européennes EN 46 et EN 47. Certaines éprouvettes ont subi des épreuves de vieillissement selon les normes européennes EN 84 (délavage) et EN 73 (évaporation). Ainsi les larves de capricornes sont soit placées au centre d'un trou (EN 47) soit à la surface des éprouvettes derrière une vitre (EN 46). Après un mois, on vérifie que les larves soient toujours en vie, si tel est le cas le test dure encore 8 semaines.

### Résultats :

Après un mois, 100% des larves sont mortes quel que soit le test, sans que les blocs ne subissent aucune tentative d'attaque. La norme EN 47 montre que les larves ne forent pas les éprouvettes traitées par le produit décrit ci-dessus. La norme EN 46, montre que le traitement a un effet répulsif à l'encontre des larves de capricornes. Donc le traitement décrit ci-dessus protège le bois à l'encontre des larves d'*Hylotropus bajulus.*

### 5) Résistance à l'attaque de Reticulens sentonensis ou Termites : norme européenne EN 117 accélérée

### Eprouvettes :

Les éprouvettes traitées (10) ont les dimensions suivantes : diamètre 25 mm et une épaisseur de 2 mm et le taux d'imprégnation moyen est de 540 Kg/m³, aucune variation dimensionnelle n'a été constatée.

### Description :

Les éprouvettes traitées ont été soumises au test de résistance accéléré aux termites selon la norme européenne EN 117 accélérée.

### Résultats :

Après 34 jours, 100% des termites mis en présence des éprouvettes traitées par le produit décrit ci-dessus sont morts. Donc, le traitement confère au bois une résistance à l'encontre de *Reticulens sentonensis.*

### EXEMPLE 2

Le mode de fabrication et le produit de traitement sont les mêmes qu'à l'Exemple 1. Par contre le mode de traitement est sensiblement différent. Le traitement des éprouvettes d'aubier de pin sylvestre se fait comme suit : les éprouvettes sont plongées dans la solution de traitement, puis le tout est chauffé à 30°C, sous vide partiel (14 mm Hg) pendant 30 minutes. Après refroidissement, les pièces de bois sont essuyées à l'aide d'un papier absorbant afin d'éliminer l'excédent de produit présent à la surface des éprouvettes. Aucune variation dimensionnelle des éprouvettes traitées n'a été constatée.

Les différentes éprouvettes de pin sylvestre sont soumises à des tests normés européens pour évaluer la capacité de protection du produit vis-à-vis de certains ennemis naturels du bois.

### 1) Résistance aux agents du bleuissement : norme européenne EN 152

### Eprouvettes :

Les éprouvettes traitées (10) ont les dimensions suivantes : 40 x 30 x 5 (mm) et le taux d'imprégnation moyen est de 539±37 Kg/m³ aucune variation dimensionnelle n'a été constatée. -

### Description :

Les éprouvettes traitées ont été soumises au test de résistance aux agents de bleuissement accéléré. Ainsi, les éprouvettes traitées ont été inoculées avec une solution composée d'un mélange de spores de deux types de champignons (Ascomycètes) : *Aureobasidium* et *Sclerophoma.* L'incubation dure 4 semaines à 20°C et dans une atmosphère relative de 60% d'humidité.

### Résultats :

Selon la norme européenne EN 152 accélérée, le traitement décrit ci-dessus est un moyen de protection du bois à l'encontre des agents de bleuissement car le taux de bleuissement a une valeur de 0 sur une échelle de 5.

### 2) Résistance aux moisissures ou Ascomycètes

### Eprouvettes :

Les éprouvettes traitées (10) ont les dimensions suivantes : 40 x 30 x 5 (mm) et le taux d'imprégnation moyen est de 469±59Kg/m³, aucune variation dimensionnelle n'a été constatée.

### Description :

Les éprouvettes traitées ont été soumises au test de résistance aux moisissures, non normé, mais selon le protocole de la norme européenne EN 152. Ainsi, les éprouvettes traitées ont été inoculées par 5 types de champignons :
- *Cladosporium cladosporoides,*
- *Pénicillium purpurogenium,*
- *Alternaria alternata,*
- *Aspergillus versicolor,*
- *Trichoderma chiarcianu.*

L'incubation dure 4 semaines à 20°C et dans une atmosphère relative de 60% d'humidité.

### Résultats :

Après 4 semaines d'incubation entre le bois traité et la solution de spores, les tests montrent que les éprouvettes traitées par le procédé décrit ci-dessus présente un taux de recouvrement des éprouvettes de 0 sur une échelle de 5. Le traitement permet donc de protéger le bois contre le recouvrement par les moisissures.

### 3) Résistance à la pourriture : norme européenne EN 113

### Eprouvettes :

Les éprouvettes traitées (25) ont les dimensions suivantes : 30 x 10 x 5 (mm) et le taux d'imprégnation moyen est de 390±20 Kg/m³, aucune variation dimensionnelle n'a été constatée.

### Description :

Les éprouvettes traitées ont été soumises au test de résistance à la pourriture selon la norme européenne EN 113 accélérée. Certaines éprouvettes ont subi des épreuves de vieillissement accéléré selon la norme européenne EN 84 (délavage) accélérée. Ainsi les éprouvettes ont été inoculées avec le champignon responsable de la pourriture brune : *Coniophora puteana.* L'incubation dure 6 semaines à 20°C et dans une atmosphère dont l'humidité relative est de 60%.

### Résultats :

A l'issue du test, les éprouvettes traitées ne présentent aucun signe de dégradation dûe au champignon contrairement aux blocs de contrôle (éprouvettes molles et noires). De plus, la perte de masse corrigée est inférieure à 3%, donc selon la norme EN 599, qui définit la performance d'un produit de préservation, notre traitement permet de protéger le bois à l'encontre de la pourriture.

### EXEMPLE 3

Le mode de préparation de la solution de base du traitement est le même qu'à l'Exemple 1. Le produit de traitement est celui de l'Exemple 1 que l'on a dilué de moitié dans de l'ester méthylique de colza, donc sa composition est la suivante :
- ester d'ASA oléique: 15%
- ester d'ASA linoléique : 12%
- ester méthylique de colza : 70%
- MAH résiduel : 3%

Le traitement se fait dans un autoclave de 100 litres et se décompose en 6 étapes décrites ci dessous :
1) Charger le bois dans l'autoclave de 100 litres
2) Faire le vide pendant 2 heures
3) Ajouter la solution de traitement
4) Faire le vide pendant une heure
5) Montée en température jusqu'à 140°C
6) Chauffage pendant 4 heures à 140°C.

Les dimensions des pièces de bois traitées sont : 80x780x60 (mm). Trois types d'essences ont été utilisés : le pin Douglas, l'épicéa et le sapin ; ces essences sont dites difficilement imprégnables. Le taux de saponifiables permet d'évaluer le nombre de sites saponifiables par hydrolyse de liaison ester. Le taux de recouvrement correspond au recouvrement par les agents du bleuissement ou par les moisissures des bois traités après deux ans en conditions réelles de stockage du bois (milieu relativement humide) ; certaines pièces de bois non traitées ont un taux de bleuissement de 4 sur une échelle de 5. La résistance mécanique est étudiée de deux manières : la résistance à la flexion (Fm) et le module d'élasticité (Em). L'ensemble des résultats est rassemblé dans le Tableau 1.

**Tableau 1**

| Essences | Taux d'imprégnation (Kg/m³) | Taux de saponifiables (eq/Kg) | Taux de recouvrement | Em (MPa) | | Fm (MPa) | |
|---|---|---|---|---|---|---|---|
| | | | | Traité | Contrôle | Traité | Contrôle |
| Pin Douglas | 83,0 | 2,2 (1,7)* | 0/5 | 5051 | 3631 | 52,8 | 46,7 |
| | | | | ±1080 | ±780 | ±15,3 | ±8,4 |
| Sapin | 24,3 | 2,2 (1,8)* | 0/5 | 7017 | 6313 | 65,2 | 58,1 |
| | | | | ±841 | ±884 | ±8,8 | ±7,5 |
| Epicéa | 25,3 | 2,1 (1,5)* | 0/5 | 7553 | 2428 | 68,0 | 30,4 |
| | | | | ±6500 | ±613 | ±15,0 | ±15,0 |

| | | | | | | | |
|---|---|---|---|---|---|---|---|
| *() le taux de saponifiable d'un bois non traité | | | | | | | |

Le taux d'imprégnation montre que la pénétration du produit se fait très bien à l'intérieur du bois même pour les essences difficilement imprégnables. Le taux de saponifiables montre que les esters d'ASA sont chimiquement greffés au bois. Les taux de recouvrement montrent que le traitement décrit ci-dessus permet de protéger le bois contre le bleuissement. Le traitement rend le bois plus résistant à la rupture.

Il est à noter que les taux d'imprégnation des pièces de bois de grandes dimensions sont inférieurs aux taux sur les petites éprouvettes. En pratique, le taux d'imprégnation pourra être ajusté entre 20 et 300 kg/m³.

### EXEMPLE 4

Le mode de préparation du produit et la composition du produit sont les mêmes qu'à l'Exemple 3.

Le traitement se fait dans un autoclave de 100 litres et se décompose en 5 étapes :
1- Chargement du bois,
2- Action du vide pendant 1 heure,
3- Chargement de la solution,
4- Montée en température jusqu'à 100°C,
5- Chauffage pendant 3 heures sous vide à 100°C.

Les dimensions des pièces de bois traitées sont : 80x780x60 (mm). Trois types d'essences ont été utilisés : le pin Douglas, l'épicéa et le sapin ; ces essences sont dites difficilement imprégnables. Le taux d'imprégnation, le taux de saponifiables et le taux de recouvrement après deux ans en conditions réelles de stockage du bois (le bois non traité peut avoir un taux de bleuissement allant jusqu'à 4 sur une échelle de 5) sont détaillés dans le Tableau 2. La résistance mécanique est étudiée, comme dans l'Exemple 3 mais uniquement sur le pin Douglas, les résultats sont détaillés dans le Tableau 3.

**Tableau 2**

| Essences | Taux d'imprégnation | Taux de saponifiables | Taux de recouvrement |
|---|---|---|---|
| | (Kg/m³) | (eq/Kg) | |
| Pin Douglas | 128,2 | 2,2 (1,6)* | 0/5 |
| Sapin | 52,8 | - | 0/5 |
| Epicéa | 47,6 | - | 0/5 |

| | | | |
|---|---|---|---|
| *() le taux de saponifiable d'un bois non traité | | | |

**Tableau 3**

| | Em (MPa) | Fm (MPa) |
|---|---|---|
| Pin douglas traité | 6891±1900 | 55,3±13,0 |
| Pin douglas non traité | 3631±780 | 46,7±8,4 |

Le taux d'imprégnation montre que la pénétration du produit se fait très bien à l'intérieur du bois même pour les essences difficilement imprégnables. Le taux de saponifiables montre que les esters d'ASA sont chimiquement greffés au bois. Les taux de recouvrement montrent que le traitement décrit ci-dessus permet de protéger le bois contre le bleuissement. Le traitement rend le bois plus résistant à la rupture.

### EXEMPLE 5

Le mode de préparation du produit et la composition du produit sont les mêmes qu'à l'Exemple 3.

Le traitement se fait dans un autoclave de 100 litres et se décompose en 3 étapes :
1- Chargement du bois et de la solution de traitement
2- Montée en température jusqu'à 100°C,
3- Pression (entre 5 et 6 bars) et chauffage à 100°C pendant 3 heures.

Les dimensions des pièces de bois traitées et le taux d'imprégnation sont détaillés dans le Tableau 4, ainsi que le taux de saponifiables et le taux de recouvrement. Trois types d'essences ont été utilisés : le pin Douglas, l'épicéa et le sapin ; ces essences sont dites difficilement imprégnables. La résistance mécanique est étudiée comme dans l'Exemple 3 mais uniquement sur le pin Douglas, les résultats sont détaillés dans le Tableau 5.

**Tableau 4**

| Essences | Dimensions (mm) | Taux d'imprégnation (Kg/m³) | Taux de saponifiables (eq/Kg) | Taux de recouvrement |
|---|---|---|---|---|
| Pin Douglas | 80x65x720 | 96,0 | 2,0 (1,5)* | 0/5 |
| | 80x65x360 | 97,5 | | 0/5 |
| Sapin | 80x65x720 | 182,7 | 2,3 (1,7)* | 0/5 |
| | 80x65x360 | 261,9 | | 0/5 |
| Epicéa | 80x65x720 | 159,0 | 2,1 (1,5)* | 0/5 |
| | 80x65x360 | 204,0 | | 0/5 |

| | | | | |
|---|---|---|---|---|
| *() le taux de saponifiable d'un bois non traité | | | | |

**Tableau 5**

| | Em (MPa) | Fm (MPa) |
|---|---|---|
| Pin douglas traité | 6052±1720 | 59,4±8,4 |
| Pin douglas non traité | 3631±780 | 46,7±8,4 |

Le taux d'imprégnation montre que la pénétration du produit se fait très bien à l'intérieur du bois même pour les essences difficilement imprégnables. Le taux de saponifiables montre que les esters d'ASA sont chimiquement greffés au bois. Les taux de recouvrement montrent que le traitement décrit ci-dessus permet de protéger le bois contre le bleuissement. Le traitement rend le bois plus résistant à la rupture.

## Revendications

1. Procédé de traitement d'un matériau ligno-cellulosique pourvu de fonctions hydroxyles, en vue d'améliorer la préservation dudit matériau et d'en accroître les propriétés mécaniques, **caractérisé en ce que** :
- on imprègne le matériau ligno-cellulosique au moyen d'un ester d'anhydride alkényle succinique (dit ester d'ASA) ou d'un ester d'acide alkényle succinique (dit ester d'ASAcide), possédant au moins une chaîne aliphatique estérifiée pourvue en bout de chaîne d'une fonction ester,
- on opère un greffage de l'ester d'ASA ou de l'ester d'ASAcide sur le matériau ligno-cellulosique en engendrant la fixation d'au moins une partie des radicaux anhydride ou acide de l'ester d'ASA ou de l'ester d'ASAcide sur les fonctions hydroxyles du matériau ligno-cellulosique.

2. Procédé de traitement selon la revendication 1, **caractérisé en ce qu'**on utilise un ester d'ASA ou un mélange d'esters d'ASA du groupe suivant : ester d'ASA oléique, ester d'ASA linoléique, ester d'ASA linolénique, ester d'ASA érucique.

3. Procédé de traitement selon l'une des revendications 1 ou 2, **caractérisé en ce qu'**on utilise l'ester d'ASA ou l'ester d'ASAcide en solution dans un composé vecteur constitué par un ester d'acide gras, ledit ester d'ASA ou ester d'ASAcide étant solubilisé dans l'ester d'acide gras en proportion pondérale au moins égale à 5 % par rapport au poids de la solution.

4. Procédé de traitement selon la revendication 3, **caractérisé en ce qu'**on utilise un ester méthylique comme composé vecteur.

5. Procédé de traitement selon la revendication 4, **caractérisé en ce qu'**on utilise un ester d'ASA en solution dans un ester méthylique dans une proportion pondérale comprise entre 25 % et 60 % d'ester d'ASA par rapport au poids de la solution.

6. Procédé selon l'une des revendications 1 à 5 pour le traitement de bois, **caractérisé en ce qu'**on réalise l'imprégnation du bois de façon que la quantité d'ester d'ASA soit comprise entre 20 kg et 300 kg par m³ de bois.

7. Procédé selon l'une des revendications 1 à 6, **caractérisé en ce que** les opérations d'imprégnation et de greffage sont réalisées à température ambiante comprise entre 15°C et 30°C.

8. Procédé selon l'une des revendications 1 à 6, **caractérisé en ce qu'**au moins l'opération de greffage est réalisée à chaud à une température comprise entre 60°C et 160°C.

9. Procédé selon l'une des revendications 1 à 8, **caractérisé en ce qu'**on utilise un ester d'ASA préalablement préparé grâce une ène-réaction réalisée à chaud à une température comprise entre 170°C et 230°C entre un ester d'acide gras végétal et de l'anhydride maléique, l'anhydride maléique étant en proportion inférieure à la proportion stoechiométrique de la éne-réaction.

10. Matériau ligno-cellulosique comprenant des molécules d'ester d'ASA ou d'ester d'ASAcide greffées sur des fonctions hydroxyles du matériau.

11. Matériau ligno-cellulosique selon la revendication 10, **caractérisé en ce qu'**il est obtenu après mise en oeuvre d'un procédé conforme à l'une des revendications 1 à 9.

## Claims

1. Process for treating a lignocellulosic material containing hydroxyl groups, in order to improve the preservation of the material and enhance its mechanical properties, **characterised in that**:
- the lignocellulosic material is impregnated with an alkenylsuccinic anhydride ester (ASA ester) or an alkenylsuccinic acid ester (ASAcid ester) containing at least one esterified aliphatic chain terminated with an ester radical,
- the ASA ester or the ASAcid ester is grafted onto the lignocellulosic material by bonding at least some of the anhydride or acid radicals of the ASA ester or ASAcid ester to the hydroxyl groups of the lignocellulosic material.

2. Treatment process according to claim 1, **characterised in that** an ASA ester or a mixture of ASA esters of the following group are used: oleic ASA ester, linoleic ASA ester, linolenic ASA ester, erucic ASA ester.

3. Treatment process according to one of claims 1 and 2, **characterised in that** the ASA ester or ASAcid ester is used in solution in a carrier compound consisting of a fatty acid ester, the said ASA ester or ASAcid ester being dissolved in the fatty acid ester in an amount by weight at least equal to 5% with respect to the weight of the solution.

4. Treatment process according to claim 3, **characterised in that** a methyl ester is used as carrier compound.

5. Treatment process according to claim 4, **characterised in that** an ASA ester is used in solution in a methyl ester in a proportion by weight of between 25% and 60% of ASA ester with respect to the weight of the solution.

6. Process according to one of claims 1 to 5 for the treatment of wood, **characterised in that** the wood is impregnated so that the amount of ASA ester is between 20 kg and 300 kg per m³ of wood.

7. Process according to one of claims 1 to 6, **characterised in that** the impregnation and grafting operations are carried out at ambient temperature between 15°C and 30°C.

8. Process according to one of claims 1 to 6, **characterised in that** at least the grafting operation is carried out by heating at a temperature between 60°C and 160°C.

9. Process according to one of claims 1 to 8, **characterised in that** an ASA ester is used that has previously been prepared by an ene reaction, carried out by heating at a temperature between 170°C and 230°C, between a plant fatty acid and maleic anhydride, the maleic anhydride being in a substoichiometric amount in the ene reaction.

10. Lignocellulosic material containing ASA ester molecules or ASAcid ester molecules grafted on to the hydroxyl groups of the material.

11. Lignocellulosic material according to claim 10, **characterised in that** it is obtained by means of a process according to one of claims 1 to 9.

## Patentansprüche

1. Verfahren für die Bearbeitung eines mit Hydroxylfunktionen versehenen Lignin-Zellulosematerials, um die Erhaltung des besagten Materials zu verbessern und dessen mechanische Eigenschaften zu erhöhen, **dadurch gekennzeichnet, daß**:
- Das Lignin-Zellulosematerial vermittels eines Alkenylbernsteinsäureanhydrid (sogenannten ASA-Esters) oder mit einem Alkenylbernsteinsäureester (dem sogenannten ASäure-Ester) imprägniert wird, der mindestens eine veresterte aliphatische Kette besitzt, die am Ende der Kette mit einer Esterfunktion versehen ist;
- Es wird eine Pfropfung mit ASA-Ester oder mit ASäure-Ester auf dem Lignin-Zellulosematerial durchgeführt, indem die Fixierung von zumindest einem Teil der anhydriden oder der säuren Radikale des ASA-Esters oder des ASäureesters auf die Hydroxylfunktionen des Lignin-Zellulosematerials vorgenommen wird.

2. Verfahren für die Verarbeitung nach Anspruch 1, **dadurch gekennzeichnet, daß** ein ASA-Ester oder Mischung aus ASA-Estern der folgenden Gruppe verwendet wird: Öl-ASA-Ester, Linol-ASA-Ester, Linolen-ASA-Ester, Eruca-ASA-Ester.

3. Verfahren für die Verarbeitung nach einem beliebigen der vorstehenden Ansprüche 1 oder 2, **dadurch gekennzeichnet, daß** der ASA-Ester oder der ASäure-Ester in Lösung in einer Vektorverbindung verwendet wird, die aus einem Fettsäureester gebildet wird, wobei der besagte ASA-Ester oder der ASäure-Ester im gewichtsmäßigen Anteil mit mindestens gleich 5% im Verhältnis zum Gewicht der Lösung aufgelöst ist.

4. Verfahren für die Verarbeitung nach Anspruch 3, **dadurch gekennzeichnet, daß** ein Methylester als Vektorverbindung benutzt wird.

5. Verfahren für die Verarbeitung nach Anspruch 4, **dadurch gekennzeichnet, daß** ein ASA-Ester in Lösung in einem Methylester in einem Gewichtsanteil von zwischen 25% und 60% ASA-Ester im Verhältnis zum Gewicht der Lösung verwendet wird.

6. Verfahren nach einem beliebigen der vorstehenden Ansprüche 1 bis 5 für die Holzbearbeitung, **dadurch gekennzeichnet, daß** die Imprägnierung des Holzes so durchgeführt wird, daß die Menge ASA-Ester bei zwischen 20 kg und 300 kg pro m3 Holz liegt.

7. Verfahren nach einem beliebigen der vorstehenden Ansprüche 1 bis 6, **dadurch gekennzeichnet, daß** die Vorgänge Imprägnierung und Pfropfung bei Raumtemperatur von zwischen 15°C und 30°C durchgeführt werden.

8. Verfahren nach einem beliebigen der vorstehenden Ansprüche 1 bis 6, **dadurch gekennzeichnet, daß** zumindest der Vorgang der Pfropfung im Heißzustand bei einer Temperatur von zwischen 60°C und 160°C durchgeführt wird.

9. Verfahren nach einem beliebigen der vorstehenden Ansprüche 1 bis 8, **dadurch gekennzeichnet, daß** ein ASA-Ester verwendet wird, der vorher mit einer En-Reaktion vorbereitet wurde, die im Heißzustand bei einer Temperatur von zwischen 170°C und 230°C zwischen einem pflanzlichen Fettsäureester und Maleinanhydrid durchgeführt wurde, wobei das Maleinanhydrid in geringerem Anteil als der stöchiometrische Anteil der En-Reaktion vorhanden ist.

10. Lignin-Zellulosematerial, das ASA-Estermoleküle oder ASäureestermoleküle umfaßt, die auf Hydroxylfunktionen des Materials aufgepfropft wurden.

11. Lignin-Zellulosematerial nach Anspruch 10, **dadurch gekennzeichnet, daß** es nach dem Einsatz eines Verfahrens nach einem der Ansprüche 1 bis 9 erzielt wird.
